# EUROPEAN PATENT SPECIFICATION

(11) **EP 3 858 648 B1**
(45) Date of publication and mention of the grant of the patent: **13.11.2024**
(21) Application number: 20154637.1
(22) Date of filing: 30.01.2020
(51) Int. Cl.: B60G 21/05

(54) **MOTOR-VEHICLE REAR SUSPENSION SYSTEM HAVING A MODULAR STRUCTURE WHICH CAN BE CONFIGURED AS A TWIST AXLE SUSPENSION OR AS A RIGID AXLE SUSPENSION**
HINTERE FEDERUNG DES KRAFTFAHRZEUGS MIT EINER MODULAREN STRUKTUR, DIE ALS VERBUNDLENKERACHSE ODER ALS STARRACHSE KONFIGURIERT WERDEN KANN
SYSTÈME DE SUSPENSION ARRIÈRE DE VÉHICULE AUTOMOBILE AYANT UNE STRUCTURE MODULAIRE QUI PEUT ÊTRE CONFIGURÉE COMME UNE SUSPENSION D'ESSIEU DE TORSION OU COMME UNE SUSPENSION D'ESSIEU RIGIDE

(43) Date of publication of application: 04.08.2021
(73) Proprietor: Stellantis Europe S.p.A., 10135 Torino, (TO) (IT)
(72) Inventor: PAVESIO, Carlo, I-10135 Torino (IT); PASTORE, Fabrizio, I-10135 Torino (IT); MESSINA, Alessandro, I-10135 Torino (IT); ROSTAGNO, Idi Luigi, I-10135 Torino (IT); VIGGIANO, Dario Vincenzo, I-10135 Torino (IT)
(74) Representative: Buzzi, Notaro & Antonielli d'Oulx S.p.A.

(56) References cited:
- WO-A1-2011/050483
- DE-U1- 202013 100 881
- US-A1- 2014 252 740

## Description

### Field of the invention

The present invention relates to motor-vehicle suspension systems and in particular to rear suspension systems of the type comprising a pair of longitudinal arms, having front ends carrying swivel joints for articulated connection to a supporting structure of the vehicle and rear ends carrying respective wheel supports, and a cross-member in the form of a main tubular element, having opposite ends configured to be rigidly connected to the two longitudinal arms.

### Prior art

Suspensions of the so-called twist axle type are old and well known; they comprise a pair of longitudinal arms of the above indicated type and a cross-member which connects respective portions of the two longitudinal arms with each other, which portions are located at intermediate positions between the front ends and the rear ends of the longitudinal arms.

Rigid axle suspensions with longitudinal arms are also well known, in which the wheel supports are rigidly connected to the ends of a rigid axle. A suspension of this type is known from US 2014/0252740 A1.

In the modern production of motor-vehicles, such as in particular in the production of light-duty vehicles, the need is felt of a suspension system having a modular structure which enables the suspension to be configured as a twist axle suspension or as a rigid axle suspension, as a function of design needs. For example, there may be a need to design the same vehicle model both in a version for traction with an internal combustion engine, and in a version for electric traction, in which the necessity of providing sufficient space for housing the supply electric batteries may involve a change in the configuration of the suspension.

### Field of the invention

It is therefore an object of the invention that of providing a motor-vehicle rear suspension system having a modular structure adapted to be configured as a twist axle suspension or as a rigid axle suspension.

A further object of the invention is that of providing a motor-vehicle suspension system which is able to achieve the above indicated purpose with an extremely simple and inexpensive structure.

### Summary of the invention

In view of achieving one or more of the above indicated objects, the invention provides a motor-vehicle rear suspension system having the features which have been indicated at the beginning of the present description and further characterized in that said main tubular element and said longitudinal arms are configured in such a way that the tubular element can be rigidly connected to the longitudinal arms in any of two selectable mounting positions:
- a first mounting position in which said tubular element is rigidly connected to the longitudinal arms at positions which are substantially coaxial with the wheel supports, so as to define a rigid axle suspension,
- a second mounting position, in which said tubular element is rigidly connected to the longitudinal arms at an intermediate position between the front and rear ends of the longitudinal arms, so as to define a twist axle suspension,

said suspension system being further characterized in that each wheel support is rigidly connected to the respective longitudinal arm through a respective auxiliary tubular element, having an outer end projecting from an outer lateral surface of the longitudinal arm and rigidly connected to the wheel support, and an inner end projecting from an inner lateral surface of the longitudinal arm, and in that in said first mounting position said main tubular element has its opposite ends rigidly connected to the inner ends of the two auxiliary tubular elements, and wherein
each longitudinal arm has a main body of sheet-metal and an auxiliary body configured to be welded to the main body only in the twist axle suspension configuration, so as to define an outer lateral wall of the longitudinal arm and an inner lateral wall of the longitudinal arm which are spaced from each other, the suspension being further characterized in that in said second mounting position of the main tubular element, corresponding to the twist axle suspension configuration, said main tubular element has end portions each welded to the inner lateral wall of the respective longitudinal arm.

In one exemplary embodiment, said main body of each longitudinal arm has its rear portion extending substantially in a horizontal plane, with reference to the condition of use, and configured to act as a support for a helical spring of the suspension system. Furthermore, said main body of each longitudinal arm has a front portion extending substantially in a vertical plane, with reference to the condition of use, and welded to the body of an elastic bushing for the articulated connection to the supporting structure of the motor-vehicle.

Also in the case of an exemplary embodiment, the above mentioned auxiliary tubular elements are provided with brackets for connection to the rear ends of two shock-absorber units. Furthermore, the suspension system according to the invention comprises a stabilizing bar which is used only in the rigid axle suspension configuration, having one end provided with an attachment for articulation to a motor-vehicle supporting structure and an opposite end provided with an attachment for articulation to one of said auxiliary tubular elements.

### Detailed description of a preferred embodiment

Further features and advantages of the invention will become apparent from the description which follows with reference to the annexed drawings, given purely by way of non-limiting example, in which:
- figures 1A, 1B, 1C, 1D show a perspective view, a plan view, a side view and an exploded perspective view of a preferred embodiment of the suspension system according to the invention, in the rigid axle suspension configuration, and
- figures 2A, 2B, 2C, 2D show a perspective view, a plan view, a side view and an exploded perspective view of the above mentioned embodiment of the suspension system in the twist axle suspension configuration.

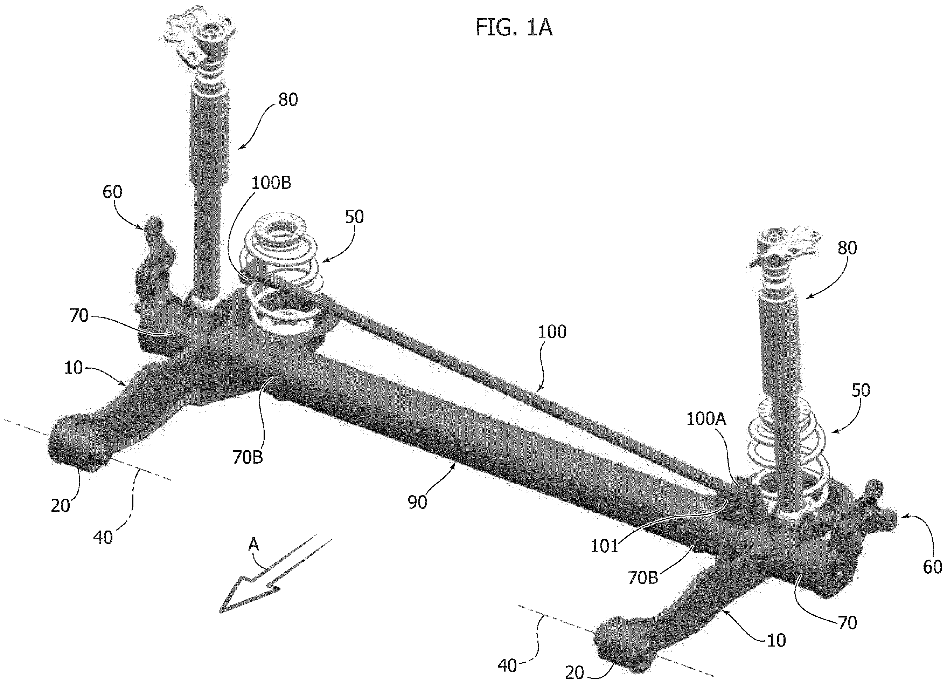

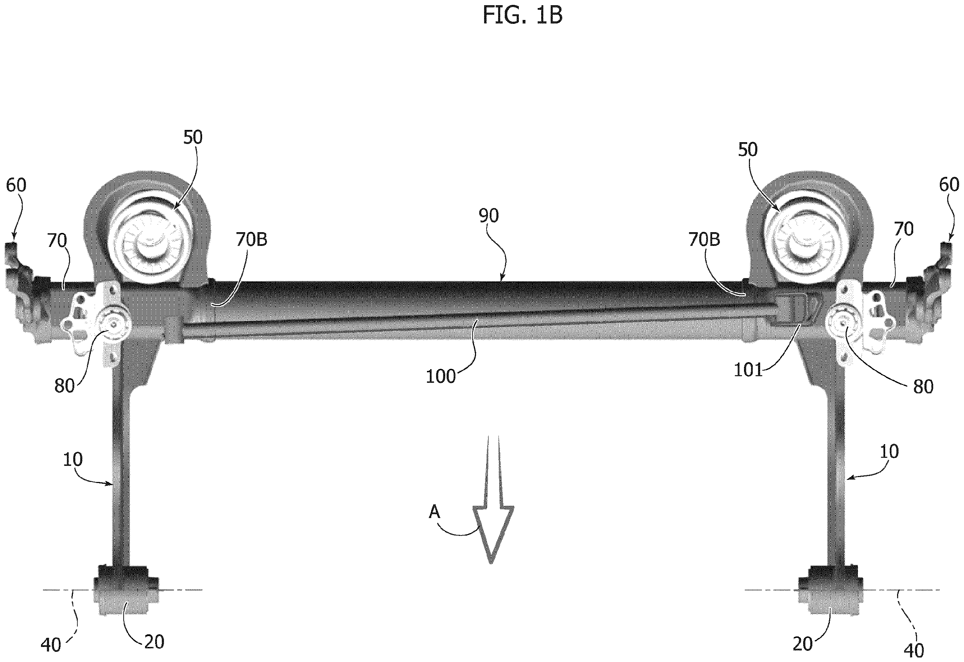

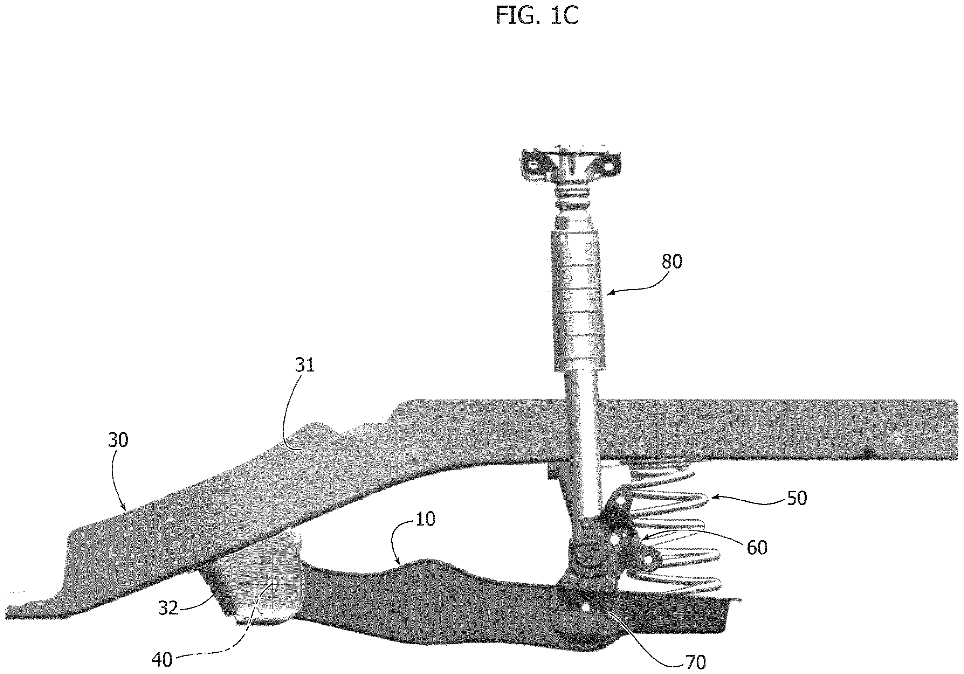

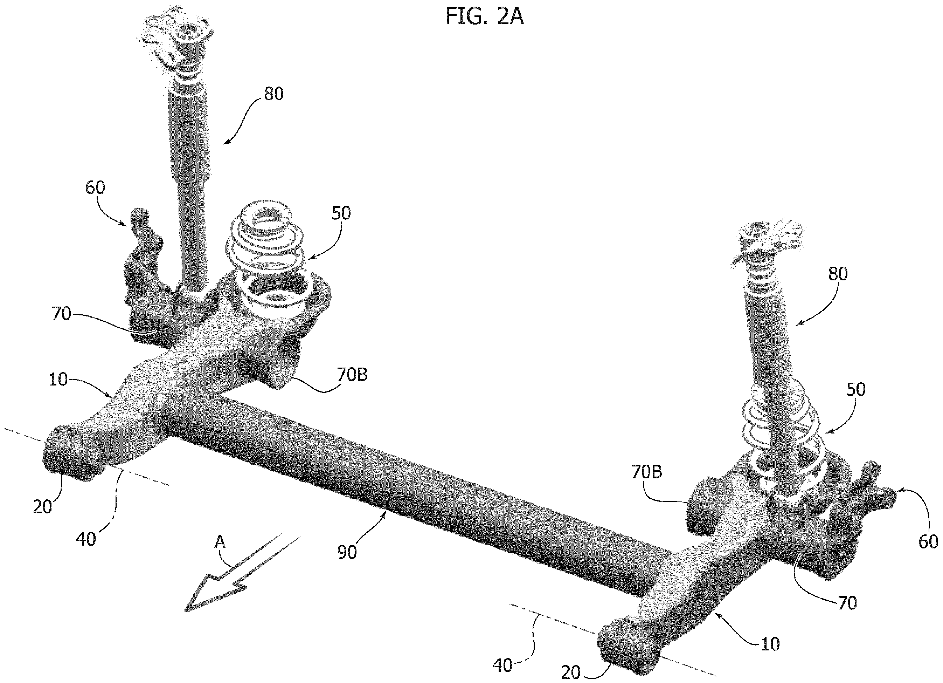

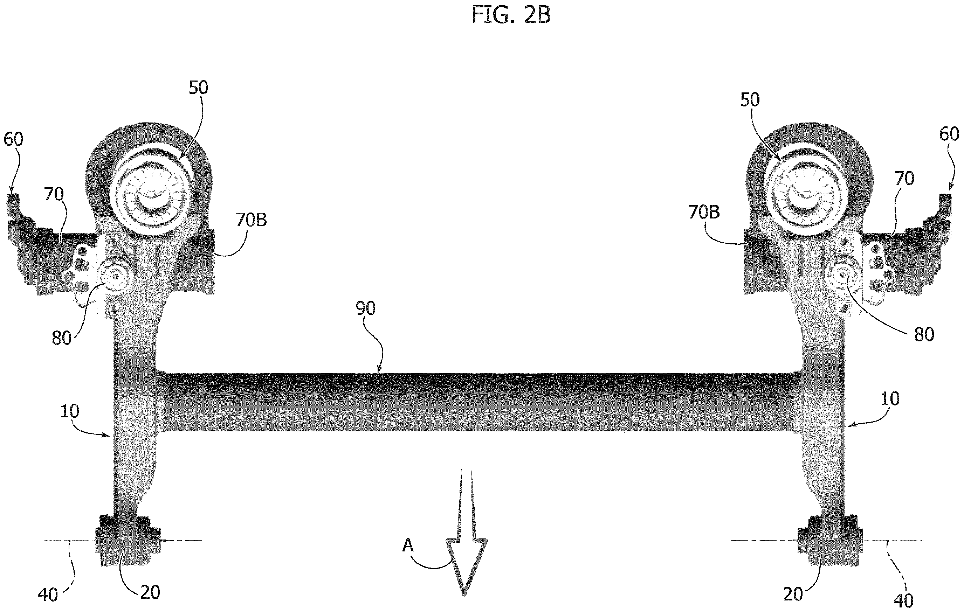

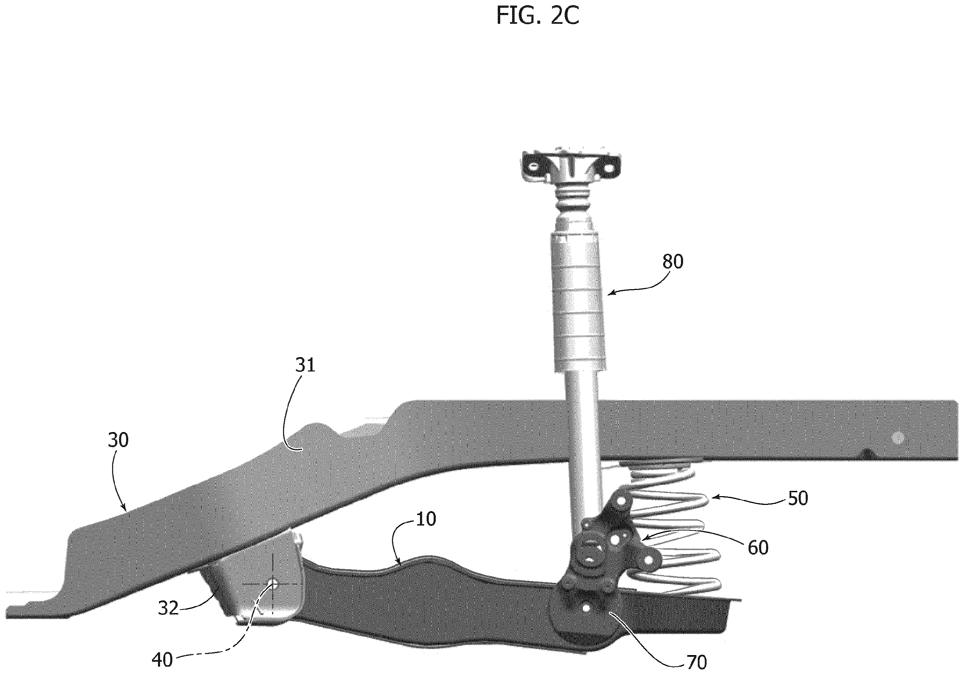

Referring to the drawings, the suspension system according to the invention includes a pair of longitudinal arms 10 having front ends, each connected to the body of an elastic bushing 20, for the articulated connection to a supporting structure 30 of the vehicle (see figures 1C, 2C) around an axis 40 which is substantially horizontal and transversal relative to the longitudinal direction of the vehicle (in figures 1A, 2A, the direction of advancement of the vehicle is indicated by arrow A).

With reference to figures 1C, 2C, the embodiment of the suspension system which is shown herein is applied to a light-duty vehicle in which the supporting structure 30 is constituted by the vehicle frame, including a pair of longitudinal beams 31 (only one of which is visible in the drawings) connected to each other by cross-member elements (not visible in the drawings), according to a technique which is conventional and known per se. However, it is clearly understood that the present invention is of general application and that in particular it can be applied on any type of vehicle, with any type of configuration of the vehicle supporting structure. In particular, the invention could be applied also to the case of a motor car, in which the supporting structure for the suspension may for example be constituted by a supporting auxiliary frame which on its turn is rigidly connected to the car body.

In the case of the example shown in figures 1C, 2C, each longitudinal beam 31 is provided with a bracket 32 for the articulated support around axis 40 of the respective longitudinal arm 10.

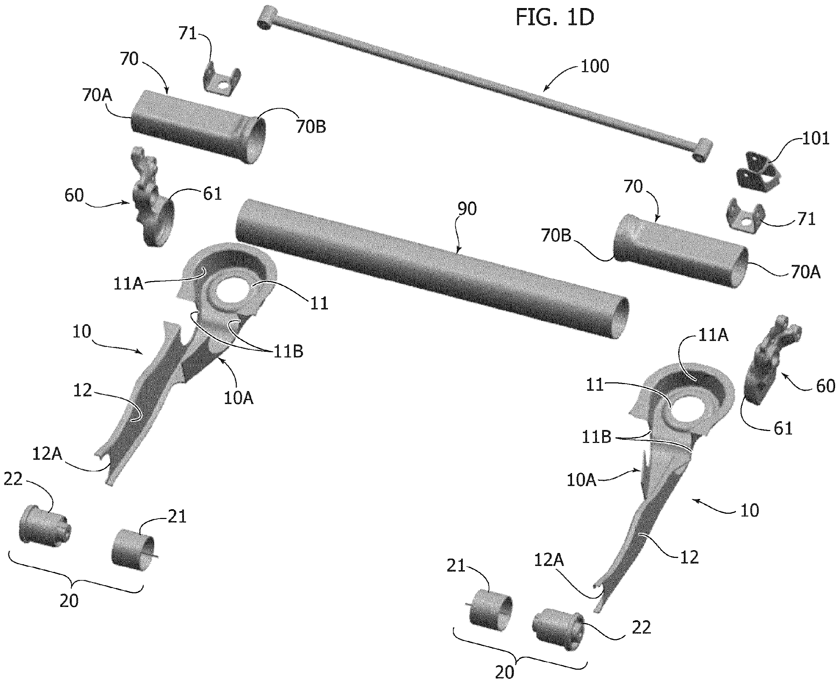

With reference in particular to figure 1A and figure 1D, in the rigid axle suspension configuration, each longitudinal arm 10 may for example have the configuration which is clearly visible in figure 1D. In this case, each longitudinal arm 10 is constituted only by a main body 10A, formed by a single element of pressed sheet-metal. The element 10A has a rear portion extending substantially in a horizontal plane, with reference to the condition of use, and surrounded by a cylindrical wall 11A, projecting upwardly, for defining a supporting seat for the lower end of a helical spring 50 (see figure 1A) of the suspension.

Also with reference to the illustrated specific example, the main body 10A of each longitudinal arm constituted by the above mentioned element of pressed sheet-metal, comprises a front portion 12 which extends substantially in a vertical plane and ends with a front end edge defining a semi-circular cavity 12A in which the metal body 21 of the elastic bushing 20 is welded.

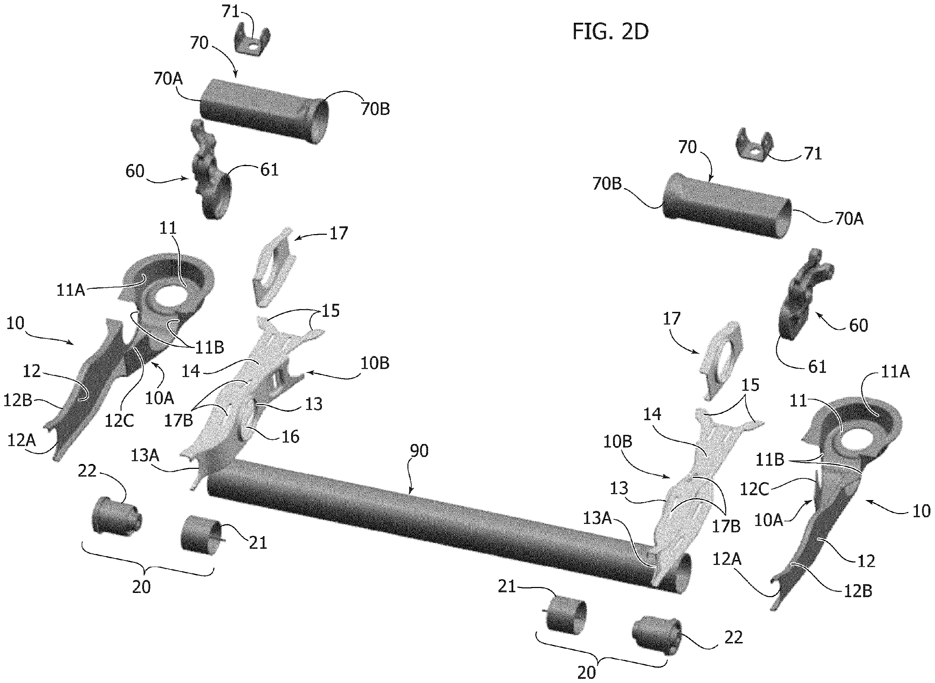

With reference to the drawings, the suspension system comprises a pair of wheel supports 60 rigidly connected to the two longitudinal arms 10. In the specific illustrated example (see figures 1D, 2D), the two wheel supports 60 are rigidly connected to the two longitudinal arms 10 through two auxiliary tubular elements 70. Each element 70 has a metal body welded to the main body 10A of the respective longitudinal arm 10 and has an outer end 70A projecting from an outer lateral surface of the respective longitudinal arm 10, and an inner end 70B projecting from the inner lateral surface of the respective longitudinal arm 10. In the illustrated example (figure 1D) the inner end 70B is shaped with an enlarged mouth. Also in the case of the illustrated example, each auxiliary element 70 is received and welded within semi-circular seats 11B defined by the lateral walls of the longitudinal arm 10.

Also with reference to the specific illustrated example, each wheel support 60 has a lower portion 61 with a cup-like cylindrical shape, which is mounted and welded above the inner end 70A of the respective auxiliary tubular element 70. Naturally, these details of construction are provided herein purely by way of example, since it is clearly understood that the present invention is of general application and may therefore be used also with a configuration of the suspension elements different from that described herein.

Also with reference to the specific illustrated example, above the auxiliary elements 70, there are welded two brackets 71 (figure 1D) for the articulated connection of the lower ends of two shock-absorber units 80, whose upper ends are to be connected to the vehicle structure.

An essential component of the present invention is constituted by a cross-member 90 in the form of a main tubular element which is configured to rigidly connect the auxiliary tubular elements 70 to each other in the rigid axle suspension configuration (figure 1A-1D) or for rigidly connecting the two longitudinal arms 10 to each other at intermediate positions between the front ends and the rear ends of these arms, in the twist axle suspension configuration (figures 2A-2D).

With reference to the rigid axle suspension configuration shown in figures 1A-1D, for the main tubular element 90 a first mounting position is selected, in which the opposite ends of element 90 are received and welded within the inner ends 70B of the auxiliary tubular elements 70.

In this configuration, therefore, the element 90 is arranged coaxially to the two auxiliary elements 70 carrying the wheel supports 60.

Furthermore, with reference in particular to figure 1A, in the rigid axle suspension configuration, there is provided an auxiliary element 100 in form of a stabilizing rod having one end 100A provided with an attachment for the articulated connection to a bracket 101 welded on one of the two auxiliary elements 70. At the opposite end, the stabilizing bar 100 has an attachment 100B for the articulated connection to the vehicle structure. The stabilizing bar 100 is configured for extending transversely with respect to the longitudinal direction of the vehicle.

In the twist axle suspension configuration shown in figures 2A-2D, the main tubular element 90 is not engaged within the auxiliary tubular elements 70, which therefore have their inner ends 70B completely free, while element 90 has its ends welded to the two longitudinal arms 10 at intermediate positions between the front ends and the rear ends of the arms 10. However, in this case the structure of each longitudinal arm 10 comprises, in addition to the main body 10A which has been described above, also an auxiliary body 10B comprising an element of pressed sheet-metal welded to the main body 10A. The auxiliary body 10B has a vertical wall 13 which is arranged at a position substantially parallel and spaced apart with respect to wall 12 of the main body 10A and terminating with a front end 13A having a semi-circular cavity, similar to that provided at the end 12A of wall 12, for receiving the metal body 21 which surrounds the body 22 of elastomeric material of an elastic bushing 20. The body 21 is welded within its seat to the end 12A.

The walls 12, 13, which are spaced apart from each other, define thereby an outer lateral wall and an inner lateral wall of the longitudinal arm 10.

The auxiliary body 10B also has an upper wall 14 which is supported on a horizontal flange of the vertical wall 12 of the main body 10A, as well a further horizontal flange 12C of a vertical tab defined by the main body 10A. Finally, the upper wall 14 of the auxiliary body 10B has a rear end with appendages 15 which rest on an upper circumferential flange of wall 11A of the main body 10A.

At the overlapped walls of the main body 10A and the auxiliary body 10B, these walls are rigidly connected to each other by welding, so that the structure of each longitudinal arm acquires a box-like configuration suitable to a twist axle suspension. In the coupled condition, the main body 10A and the auxiliary body 10B leave seats 11B free for receiving the auxiliary tubular body 70.

In the case of the illustrated example, each auxiliary body 10B has a circular aperture 16 through which there can be introduced the respective end of the main tubular body 90. At the aperture 16, to the auxiliary body 10B there is welded (at two slots 17B) a further element 17 of sheet-metal, located on the side of the wall of body 10B opposite to the side from which the element 90 is introduced, so that this element 17 forms an integral part of the inner lateral wall of the longitudinal arm. The corresponding end of element 90 is inserted through aperture 16 up to come in contact with element 17. In this condition, the element 90 is welded to the inner lateral wall of the longitudinal arm, defined by the body 10B and the element 17.

Apart from the above, the structure of the suspension system in the twist axle suspension configuration shown in figures 2A-2D is identical to that shown with reference to figures 1A-1D, except for that in this case the stabilizing bar 100 is eliminated. In other words, all the elements of the suspension system which are shown in figures 1A-1D, except for the stabilizing bar 100, constitute common parts of the suspension system in the rigid axle suspension configuration and in the twist axle suspension configuration. In the case of a rigid axle suspension configuration, the element constituted by the stabilizing bar 100 is added, whereas in the case of the twist axle suspension configuration, the elements 10B and 17 are added, which complete the structure of each longitudinal arm.

Due to the above described features, the suspension system according to the invention may be configured as a rigid axle suspension or a twist axle suspension without implying complicated and expensive operations for shifting from one type of configuration to the other. In this way, the producer can simplify the production process and can rationalize and further standardize the suspension components.

In the case of a light-duty vehicle, it can be provided for example that the rigid axle suspension configuration is adopted for a vehicle model with electric traction, in order to leave a greater space free between the longitudinal arms of the suspension for housing the supply electric batteries.

In the illustrated example, the main tubular element 90 and the auxiliary tubular elements 70 each have a transverse cross-section having a circular shape. However it is possible to adopt cross-section of any different shape, for example of oval shape for elements 70, 90.

Naturally, while the principle of the invention remains the same, the details of construction and the embodiments may widely vary with respect to what has been described and illustrated purely by way of example, without departing from the scope of the present invention, as defined in the annexed claims.

## Claims

1. Motor-vehicle rear suspension system, comprising:
- a pair of longitudinal arms (10), having front ends carrying swivel joints (20) for the articulated connection to a vehicle supporting structure (30) and rear ends carrying respective wheel supports (60),
- a cross-member in the form of a main tubular element (90), having opposite ends configured to be rigidly connected to the two longitudinal arms (10),
wherein said main tubular element (90) and said longitudinal arms (10) are configured in such a way that said main tubular element (90) can be rigidly connected to the longitudinal arms (10) in any of two selectable mounting positions:
- a first mounting position, in which said main tubular element (90) is rigidly connected to the longitudinal arms (10) at a position substantially coaxial with the wheel supports (60) so as to define a rigid axle suspension,
- a second mounting position, in which said main tubular element (90) is rigidly connected to the longitudinal arms (10) at positions intermediate between the front ends and the rear ends of the longitudinal arms (10), so as to define a twist axle suspension,
wherein each wheel support (60) is rigidly connected to the respective longitudinal arm (10) through a respective auxiliary tubular element (70), having an outer end projecting from an outer lateral surface of the longitudinal arm (10) and rigidly connected to the wheel support (60) and an inner end projecting from an inner lateral surface of the longitudinal arm (10),
wherein said first mounting position said main tubular element (90) has its opposite ends rigidly connected to the inner ends (70B) of the two auxiliary tubular elements (70),
wherein each longitudinal arm (10) has a main body (10A) of sheet-metal and an auxiliary body (10B) also made of sheet-metal and configured to be welded to the main body (10A) only in the twist axle suspension configuration, so that said main body (10A) and said auxiliary body (10B) respectively define an outer lateral wall (12) of the longitudinal arm and an inner lateral wall (13) of the longitudinal arm, which are spaced apart from each other, and wherein in said second mounting position of the main tubular element (90) corresponding to the twist axle suspension configuration, said main tubular element (90) has end portions each welded to the inner lateral wall (13) of the respective longitudinal arm (10).

2. Suspension system according to claim 1, **characterized in that** said main body (10A) of each longitudinal arm (10) has a rear portion (11) extending substantially in a horizontal plane, with reference to the condition of use, and configured for acting as a support for a helical spring (50) of the suspension system.

3. Suspension system according to claim 1 or claim 2, **characterized in that** said main body (10A) of each longitudinal arm (10) has a front portion (12) extending substantially in a vertical plane, with reference to the condition of use, and welded to the body (21) of an elastic bushing (20) for the articulated connection to the vehicle supporting structure (30).

4. Suspension system according to claim 1, **characterized in that** said auxiliary tubular elements 70 are provided with brackets (71) for connection of the rear ends of two shock-absorber units (80).

5. Suspension system according to claim 1, **characterized in that** it further comprises a stabilizing bar 100 provided for being used only in the rigid axle suspension configuration, and having one end provided with an attachment (100B) for articulation to a vehicle supporting structure (30) and an opposite end provided with an attachment (100A) for articulation to one of said auxiliary tubular elements (70).

## Patentansprüche

1. Hinterradaufhängungssystem für ein Kraftfahrzeug, umfassend:
- ein Paar von Längsarmen (10) mit vorderen Enden, die Drehgelenke (20) für die gelenkige Verbindung mit einer Fahrzeugtragstruktur (30) tragen, und hinteren Enden, die jeweilige Radträger (60) tragen,
- einen Querträger in Form eines Hauptrohrelements (90) mit entgegengesetzten Enden, die dazu gestaltet sind, starr mit den zwei Längsarmen (10) verbunden zu sein,
wobei das Hauptrohrelement (90) und die Längsarme (10) derart gestaltet sind, dass das Hauptrohrelement (90) mit den Längsarmen (10) in irgendeiner von zwei wählbaren Montagepositionen starr verbunden sein kann:
- einer ersten Montageposition, in der das Hauptrohrelement (90) mit den Längsarmen (10) in einer im Wesentlichen mit den Radträgern (60) koaxialen Position starr verbunden ist, um eine Starrachsaufhängung zu definieren,
- einer zweiten Montageposition, in der das Hauptrohrelement (90) mit den Längsarmen (10) in Zwischenpositionen zwischen den vorderen Enden und den hinteren Enden der Längsarme (10) starr verbunden ist, um eine Verbundlenkerachsaufhängung zu definieren,
wobei jeder Radträger (60) mit dem jeweiligen Längsarm (10) durch ein jeweiliges Hilfsrohrelement (70) starr verbunden ist, das ein äußeres Ende, das von einer äußeren Seitenfläche des Längsarms (10) vorsteht und mit dem Radträger (60) starr verbunden ist, und ein inneres Ende aufweist, das von einer inneren Seitenfläche des Längsarms (10) vorsteht,
wobei in der ersten Montageposition die entgegengesetzten Enden des Hauptrohrelements (90) starr mit den inneren Enden (70B) der zwei Hilfsrohrelemente (70) verbunden sind,
wobei jeder Längsarm (10) einen Hauptkörper (10A) aus Metallblech und einen Hilfskörper (10B) aufweist, der ebenfalls aus Metallblech besteht und dazu gestaltet ist, nur in der Ausgestaltung als Verbundlenkerachsaufhängung derart an den Hauptkörper (10A) geschweißt zu sein, dass der Hauptkörper (10A) und der Hilfskörper (10B) jeweils eine äußere Seitenwand (12) des Längsarms und eine innere Seitenwand (13) des Längsarms definieren, die voneinander beabstandet sind, und wobei in der zweiten Montageposition des Hauptrohrelements (90), die der Ausgestaltung als Verbundlenkerachsaufhängung entspricht, das Hauptrohrelement (90) Endabschnitte aufweist, die jeweils an die innere Seitenwand (13) des jeweiligen Längsarms (10) geschweißt sind.

2. Aufhängungssystem nach Anspruch 1, **dadurch gekennzeichnet, dass** der Hauptkörper (10A) von jedem Längsarm (10) einen hinteren Abschnitt (11) aufweist, der sich im Wesentlichen in einer horizontalen Ebene bezogen auf den Gebrauchszustand erstreckt und dazu gestaltet ist, als Träger für eine Schraubenfeder (50) des Aufhängungssystems zu dienen.

3. Aufhängungssystem nach Anspruch 1 oder Anspruch 2, **dadurch gekennzeichnet, dass** der Hauptkörper (10A) von jedem Längsarm (10) einen vorderen Abschnitt (12) aufweist, der sich im Wesentlichen in einer vertikalen Ebene bezogen auf den Gebrauchszustand erstreckt und an den Körper (21) einer elastischen Buchse (20) für die gelenkige Verbindung mit der Fahrzeugtragstruktur (30) geschweißt ist.

4. Aufhängungssystem nach Anspruch 1, **dadurch gekennzeichnet, dass** die Hilfsrohrelemente 70 mit Winkelstücken (71) für die Verbindung der hinteren Enden von zwei Stoßdämpfereinheiten (80) versehen sind.

5. Aufhängungssystem nach Anspruch 1, **dadurch gekennzeichnet, dass** es ferner eine Stabilisierungsstange 100 umfasst, die nur für die Verwendung in der Ausgestaltung als Starrachsaufhängung vorgesehen ist und ein Ende, das mit einem Ansatz (100B) zum Anlenken an eine Fahrzeugtragstruktur (30) versehen ist, und ein entgegengesetztes Ende aufweist, das mit einem Ansatz (100A) zum Anlenken an eines der Hilfsrohrelemente (70) versehen ist.

## Revendications

1. Système de suspension arrière de véhicule automobile, comprenant :
- une paire de bras longitudinaux (10), ayant des extrémités avant portant des articulations pivotantes (20) pour la liaison articulée à une structure de support de véhicule (30) et des extrémités arrière portant des supports de roues respectifs (60),
- une traverse sous la forme d'un élément tubulaire principal (90), ayant des extrémités opposées configurées pour être reliées rigidement aux deux bras longitudinaux (10),
dans lequel ledit élément tubulaire principal (90) et lesdits bras longitudinaux (10) sont configurés de manière à ce que ledit élément tubulaire principal (90) puisse être relié rigidement aux bras longitudinaux (10) dans l'une des deux positions de montage pouvant être sélectionnées :
- une première position de montage, dans laquelle ledit élément tubulaire principal (90) est relié rigidement aux bras longitudinaux (10) à une position sensiblement coaxiale avec les supports de roues (60) de manière à définir une suspension d'essieu rigide,
- une seconde position de montage, dans laquelle ledit élément tubulaire principal (90) est relié rigidement aux bras longitudinaux (10) à des positions intermédiaires entre les extrémités avant et les extrémités arrière des bras longitudinaux (10), de manière à définir une suspension d'essieu de torsion,
dans lequel chaque support de roue (60) est relié rigidement au bras longitudinal respectif (10) par un élément tubulaire auxiliaire respectif (70), ayant une extrémité externe faisant saillie depuis une surface latérale externe du bras longitudinal (10) et reliée rigidement au support de roue (60) et une extrémité interne faisant saillie depuis une surface latérale interne du bras longitudinal (10),
dans lequel dans ladite première position de montage ledit élément tubulaire principal (90) a ses extrémités opposées reliées rigidement aux extrémités internes (70B) des deux éléments tubulaires auxiliaires (70),
dans lequel chaque bras longitudinal (10) a un corps principal (10A) en tôle et un corps auxiliaire (10B) également réalisé en tôle et configuré pour être soudé au corps principal (10A) uniquement dans la configuration de suspension d'essieu de torsion, de sorte que ledit corps principal (10A) et ledit corps auxiliaire (10B) définissent respectivement une paroi latérale externe (12) du bras longitudinal et une paroi latérale interne (13) du bras longitudinal, qui sont espacées l'une de l'autre, et dans lequel dans ladite seconde position de montage de l'élément tubulaire principal (90) correspondant à la configuration de suspension d'essieu de torsion, ledit élément tubulaire principal (90) a des parties d'extrémité soudées chacune à la paroi latérale interne (13) du bras longitudinal respectif (10).

2. Système de suspension selon la revendication 1, **caractérisé en ce que** ledit corps principal (10A) de chaque bras longitudinal (10) a une partie arrière (11) s'étendant sensiblement dans un plan horizontal, en référence aux conditions d'utilisation, et configurée pour agir comme un support pour un ressort hélicoïdal (50) du système de suspension.

3. Système de suspension selon la revendication 1 ou 2, **caractérisé en ce que** ledit corps principal (10A) de chaque bras longitudinal (10) a une partie avant (12) s'étendant sensiblement dans un plan vertical, en référence aux conditions d'utilisation, et soudée au corps (21) d'une douille élastique (20) pour la liaison articulée à la structure de support de véhicule (30).

4. Système de suspension selon la revendication 1, **caractérisé en ce que** lesdits éléments tubulaires auxiliaires 70 sont munis de pattes de fixation (71) pour la liaison des extrémités arrière de deux unités d'amortisseur (80).

5. Système de suspension selon la revendication 1, **caractérisé en ce qu'**il comprend en outre une barre stabilisatrice 100 prévue pour être utilisée uniquement dans la configuration de suspension d'essieu rigide, et ayant une extrémité munie d'une attache (100B) pour l'articulation à une structure de support de véhicule (30) et une extrémité opposée munie d'une attache (100A) pour l'articulation à l'un desdits éléments tubulaires auxiliaires (70).
